# EUROPÄISCHE PATENTSCHRIFT

(11) **EP 0 645 296 B1**
(45) Veröffentlichungstag und Bekanntmachung des Hinweises auf die Patenterteilung: **15.01.1997**
(21) Anmeldenummer: 94115161.5
(22) Anmeldetag: 27.09.1994
(51) Int. Cl.: B62B 3/02

(54) **Handwagen nach Art eines Leiterwagens**
Handcart of the rackwagon type
Chariot à main en forme de chariot à ridelles

(30) Priorität: 27.09.1993 DE 9314501 U; 27.09.1993 DE 9314502 U; 10.05.1994 DE 9407716 U
(43) Veröffentlichungstag der Anmeldung: 29.03.1995
(73) Patentinhaber: Bielefelder Küchenmaschinen- und Transportgeräte-Fabrik vom Braucke GmbH, D-33739 Bielefeld (DE)
(72) Erfinder: Vom Braucke, Hans, D-32602 Vlotho (DE); Vom Braucke, Manfred, D-33739 Bielefeld (DE); Westerwelle, Dieter, D-33607 Bielefeld (DE)
(74) Vertreter: Strauss, Hans-Jochen, Dipl.-Phys., Dr.

(56) Entgegenhaltungen:
- DE-A- 3 631 998
- US-A- 2 452 358
- US-A- 2 774 609
- US-A- 5 249 823
- FORDERN UND HEBEN, Bd.17, Nr.2, Februar 1967, MAINZ DE Seite 82

## Beschreibung

Die Erfindung betrifft einen Handwagen nach Art eines Leiterwagens mit Pritschenplatte und Seitenwänden sowie abnehmbaren, über die Pritschenplatte hinausstehenden Stirn- und Rückwand, wobei ein als geschlossener, insbesondere aus Rohr gebildeter rechteckiger Rahmen als Auflage der Pritschenplatte vorgesehen ist, unter dessen hinterem Endbereich eine Hinterachse und unter dessen vorderem Endbereich eine um einen in einem mittig angeordneten, vertikalen Drehzapfen schwenkbare, mit einer Deichsel verbundene Vorderachse vorgesehen sind.

Handwagen sind in Stellmachertechnik seit je bekannt; aber auch als Handwagen mit Gummi-Bereifung sind solche als Weser-Kinderspielwagen seit mindestens 1970 bekannt, wobei die vorbekannten Handwagen der Stellmachertechnik zum einen mit geschlossenen Seitenwänden und zum anderen mit Gummi-bereiften Rädern versehen wurden. Weiter sind als Fördermittel etwa die seit den 50'er Jahren bekannten Hand-Pritschenwagen 2101 der Fa. Gebr. v.Braucke-Handwagen bekannt, bei denen das tragende Gestell als rechteckiges Gestell insbesondere aus Stahlrohr ausgebildet war, das mit V-förmigen Stürzen auf der Hinterachse abgestützt und die Vorderachse über einen Lenkschemel mit dem Rahmen verbunden waren. Ein dem Stand der Technik entsprechender weiterer Handwagen dieser Gattung ist aus der DE-PS 36 31 998 bekannt. Bei diesem Handwagen wird das Rahmengestell durch zwei U-förmige Teile mit horizontalen Schenkeln getragen, die im Mittelbereich ihrer Höhe mit den längeren Seiten des Rechteckrohrrahmens verschweißt sind. Dabei ragen insbesondere die vorderen und hinteren Seitenstützen weit nach oben über die Rechteck-Rohrrahmenebene, auf die die Pritschenplatte aufgelegt wird, hinaus. Diese Stützen stören sowohl beim Transport eines derartigen Handwagens im Kofferraum eines Kraftfahrzeuges, da sie eine erhebliche sperrige Wirkung mit sich bringen, sie stören aber auch beim Transport von Gegenständen, die über die Fläche der Pritschenplatte hinausragen. So ist bei dem Handwagen nach der DE-PS 36 31 998 zum einen die Einsatzmöglichkeit beim Transport von sperrigen Gegenständen begrenzt, und zum anderen ist der Transport des Handwagens in einem Kraftfahrzeug erschwert.

Auch aus der US-A-2 452 358 ist ein solcher Wagen als Anhänger für Zugmittel bekannt, der ein Fahrgestell und eine Pritschenplatte oder einen Kastenwagenaufbau aufweist, wobei das Fahrgestell gebildet ist von einer in Verlängerung der Deichsel durchgehenden Längstraverse, an der Hinterachse fest und Vorderachse schwenkbar angeordnet sind, wobei die auf die Achsen aufgesetzte luftbereiften Räder Gummi-Pneus aufweisen. Die Vorderachse an diese Längstraverse ist mittels eines Drehschemels an die Vorderache angelenkt, wobei ein vertikaler Drehzapfen für die gelenkige Verbindung sorgt. Jeweils oberhalb der Achsen sind Quertraversen vorgesehen, auf die eine Plattform auflegbar ist, und die mit vertikalen Steckhülsen versehen sind, in die Seitenwände einsteckbar sind.

Der Erfindung liegt daher die Aufgabe zugrunde, einen Handwagen der dem Oberbegriff des Anspruchs 1 entsprechenden Art so auszugestalten, daß er hinsichtlich seiner Transportierbarkeit insbesondere in Kraftfahrzeugen wesentlich einfacher zu handhaben ist und wobei der Handwagen zudem den Transport von sperrigen Gütern zuläßt.

Diese Aufgabe wird nun nach der Erfindung durch die im Hauptanspruch wiedergegebenen Merkmale gelöst; vorteilhafte Weiterbildungen und bevorzugte Ausführungsformen beschreiben die Unteransprüche.

Dadurch, daß der Rahmen mit der Hinterachse über unmittelbar auf bzw. an der Hinterachse befestigten Stützen und mit der Vorderachse mit ihrem Drehzapfen über L-förmig abgewinkelte Stützen verbunden ist, wobei die Stützen von innen am Rahmen befestigt sind und um die Dicke dieser Pritschenplatte über den Rahmen so hinausragen, daß sie mit der auf den Rahmen aufgelegten Pritschenplatte bündig abschliessen, wobei die Stützen zumindest im aufstrebenden Bereich als Rohre mit Einstecköffnungen für an den Seitenwände vorgesehen Steckmitteln ausgebildet sind, und wobei Mittel zur Sicherung der abnehmbaren Wände vorgesehen sind, wird eine Ausführungsform erreicht, bei der der Handwagen sowohl als Pritschenwagen als auch als Kastenwagen benutzt werden kann. Es wird erreicht, daß insbesondere sperrige Güter, die über die Ladefläche hinausragen, nach Abnehmen der Stirn- und der Rückwand sowie der Seitenwände leicht transportiert werden können, da hier keine störenden Seitenstützen zur Aufnahme der Seitenwände vorhanden sind. Durch das Fehlen der Seitenstützen baut das Rahmengestell zudem wesentlich niedriger als das nach dem Stand der Technik bekannte Rahmengestell, so daß die Handhabbarkeit dieses Handwagens in Kofferräumen von Kraftfahrzeugen wesentlich vereinfacht worden ist, da die sperrigen Stützen den Laderaum nicht mehr unnütz blockieren. Der Handwagen läßt sich nun einfach gestürzt mit der Pritschenplatte in den Kofferraum schieben bzw. legen.

Vorteilhaft sind dabei die hinteren Stützen als gerade Rohre ausgebildet, die sich unmittelbar auf der Hinterschse abstützen. Dadurch können Profilstücke eingesetzt werden, die lediglich abzulängen sind. Dabei weisen in zweckmäßiger Weise die hinteren Stützen ein Rechteckprofil und die vorderen Stützen ein Rundprofil auf. Aufgrund dieser unterschiedlichen Ausgestaltung der vorderen und hinteren Stützen wird erreicht, daß insbesondere zur biegesteifen Befestigung der Hinterachse mit dem Rechteckrohrrahmen eine Streifen- oder Flächenschweißung ermöglicht wird. Damit die aufzusetzenden Seitenwände jeweils an ihre zugeordneten Seitenlage eingesteckt werden, sind an den Seitenwänden außen liegende Einsteckteile angeordnet, die in die Einstecköffnungen der angewinkelten Stützen einsteckbar sind. Dabei weist das der Hinterachse zugeordnete Einsteckteil entsprechend eine Rechteckform und das der Vorderachse zugeordnete Einsteckteil der Seitenwand eine Rohrform auf. Zur besseren Einfädelung der Einsteckteile an den Seitenwänden sieht die Erfindung sich verjüngende Einsteckteile vor, wobei durch Eindrücken der Verjüngung in die Stützen ein Klemmen erreicht wird.

Vorteilhaft weisen sowohl die zur Aufnahme der Seitenwände vorgesehenen Stützen als auch die an den Seitenwänden vorgesehenen Einsteckteile seitliche Öffnungen auf, die jeweils paarweise korrespondieren und in die Sicherungsstifte einführbar sind, wobei vorzugsweise die Sicherungsstifte mit Sicherungsmitteln versehen sind. Als Sicherungsmittel ist vorteilhaft eine bajonettverschluß-ähnliche Stecksicherung oder ein offener, die Stützen teilweise umgreifender Federring vorgesehen. Dabei versteht es sich von selbst, daß hier auch Verschraubungen eingesetzt werden können.

Bei einer anderen Ausführungsform weisen sowohl die zur Aufnahme der Seitenwände vorgesehenen Stützen als auch die an den Seitenwänden vorgesehenen Einsteckteile seitliche Öffnungen auf, die jeweils paarweise korrespondieren und in die Sicherungsstifte einführbar sind. Diese Sicherungsstifte sind vorteilhaft mit Sicherungsmitteln versehen. Durch diese steckbaren Sicherungen wird eine leicht handhabbare Sicherung der Seitenwände gegeben, die zudem einfach und wirtschaftlich ist. Dabei sind -in vorteilhafter Ausbildung- diese Sicherungsstifte als Federstecker ausgebildet, die durch ihre Ausformung selbstsperrend sind.

Als Sicherungsmittel ist insbesondere eine bajonettverschluß-ähnliche Stecksicherung vorgesehen, die nach Stecken des Steckstiftes um den Bajonett-Winkel verdreht diesen gegen unbeabsichtigtes Lösen sichert; zum Entriegeln wird der Steckstift gegen Verriegelungsrichtung zurückgedreht, er kann daraufhin entfernt werden. Eine vorteilhafte Weiterbildung bietet ein Federstecker, der aufgrund seiner Ausformung mit dem Federumbug selbstsichernd ist. Alternativ dazu wird als Sicherungsmittel ein offener, die Stützen teilweise umgreifender Federring vorgesehen, der zum Verriegeln gesteckt wird; vorteilhaft wird der Federring mit einem Kettchen an der Stütze unverlierbar befestigt.

Bei einer bevorzugten Ausführungsform weisen die zur Aufnahme der Seitenwände vorgesehenen Stützen seitliche Öffnungen und die an den Seitenwänden vorgesehenen Einsteckteile dazu korrespondierende Nasen auf. Durch diese Ausbildung wird erreicht, daß die Nasen bei eingesteckten Seitenwänden in die Öffnungen einrasten und verriegelt sind; ein Entfernen der Seitenwände bedingt eine Entriegelung, die durch Verwinden der Seitenwand oder durch ein Zurückdrücken der Nasen von außen erreicht wird. Diese Art der Sicherung ist von der Querschnittsform von Stütze bzw. Einsteckteil unabhängig. Sowohl diese seitlichen Öffnungen als auch die Nasen sind dabei vorteilhaft zur Längs-Mittenebene des Handwagens gerichtet, wobei sie vorzugsweise einen unter die Oberkante der Öffnungen fassenden Hinterschnitt aufweisen. Durch diese Ausbildung wird erreicht, daß die eingesetzten Einsteckteile durch ihr eigenes Gewicht nach außen gedrückt, quasi selbst-sperrend sind, wobei deren nach innen gerichtete Nasen unter die unteren Ende der Aufnahmen greifen und so ein Herausziehen verhindern. Dies wird noch durch die nach außen gerichtete Wirkung der eingesetzten Stirn- und Rückwand verstärkt. Zum Herausnehmen der Seitenwände müssen daher zunächst die Stirn- und die Rückwand entfernt werden, dann werden die Seitenwände nach innen gedrückt und gezogen; durch dieses Drücken werden die Sperrnasen frei, und die Seitenwände lassen sich in einfacher Weise herausziehen. Durch die vorgesehene Hinterschneidung wird die Verriegelung beim Anheben der Seitenwand nicht aufgehoben, vielmehr bedarf es zur Entriegelung eines Zurückdrückens der Nase von außen. Dabei kann die Nasenöffnung von außen mit einer Blende abgedeckt sein, die ein unbeabsichtigtes Entriegeln verhindert, da sie vor einem Entriegeln erst entfernt werden muß. Die einsteckbaren Enden der Einsteckteile sind vorzugsweise durch Schlitzung federnd nachgiebig ausgebildet, wobei vorteilhaft die Schlitze zumindest bis zur Höhe der Nasen geführt und etwa rechtwinklig zu deren Achse ausgerichtet sind.

Um auch die Stirnwand und die Rückwand zu sichern, sind die Aufnahmeschienen, in die diese Wände eingesetzt werden, mit Kopfstücken versehen, die die eingesetzte Stirn- bzw. Rückwand übergreifen und diese eingesetzt so fixieren. Dabei erlaubt die keilförmige Gestaltung dieser Wände ein einfaches Einsetzen, da der untere Teil der Wände ohne Zwang zwischen die Einsteckschienen gebracht werden kann und erst beim Einschieben des letzten Teiles dieser Wände die Seitenwände nach außen gedrückt werden müssen. Dabei haben diese in den Einsteckteilen so viel Spiel, daß die Oberkanten dieser Wände unter die Kopfstücke der Einsteckschienen gedrückt werden können. Zum Entfernen dieser Wände wird umgekehrt verfahren: Zunächst werden die Seitenwände nach außen gedrückt, so daß die Oberkanten der Stirn- bzw. der Rückwand von den Kopfstücken der Einsteckschienen frei sind und so herausgehoben werden können.

Nach einer besonders vorteilhaften Ausgestaltung der Erfindung verlaufen die Seitenkanten der in aufgesetzte Leisten innenseitig an den Seitenwänden bildenden Nuten einsteckbaren Stirn- und Rückwand zur Schließung des Kastens auf der Pritschenauflage unter einem Winkel, der geringfügig größer gehalten ist als der Winkel, unter dem die Stützen am Rechteckrohrrahmen zur Aufnahme der Einsteckteile der Seitenwände angeordnet sind. Aufgrund dieser unterschiedlichen Ausgestaltung der Winkel bezüglich der Stützen und der Aufbauteile des Wagens wird erreicht, daß die Stirn- und Rückseiten die Seitenteile geringfügig nach außen drücken, so daß der Aufbaukasten unter einer leichten Verspannung auf dem Rechteckrohrrahmen aufliegt. Die Verspannung des Kastens verhindert insbesondere Geräuschentwicklungen beim Ziehen des Wagens auf unebenem Gelände.

Zur vorteilhaften Halterung der Räder sind auf die Achsstummel anstelle der die Axialbewegung begrenzenden Endscheiben Lagerstützen aus Kunststoff aufgeschoben, die mit Sperrmitteln versehen sind, die deren Lage auf der Achse gegen ein Verdrehen sichern. Diese Lagerstützen bestehen aus einem Hohlzylinder, der ohne wesentliches Spiel über den jeweiligen Achsstummel geschoben wird, so daß dessen überstehender Teil die Nabe des Rades aufnimmt. An die Außenwand des Hohlzylinders sind die Sperrmittel angeformt, die entweder aus einer sich an die Halterung für die Achse anlegenden Nase bestehen oder mit einer stopfenförmigen Anformung zum Einführen in die Enden der die Deichsellagerung bildenden, um etwa 90° umgebogenen Rohre versehen sind, wobei es sich von selbst versteht, daß diese Anformungen auch hülsenförmig ausgebildet sein können, zur Aufnahme dieser Rohrenden. Durch diese Lagerstützen wird die Herstellung wesentlich vereinfacht, da das aufwendige Anschweißen der Endscheiben durch das Aufstecken der Lagerstützen entfällt.

In Weiterbildung ist vorteilhaft das Halterungselement als einstückiges Formteil ausgebildet, wobei das Formteil aus einem in die Rohröffnungsmündung der Achse einsteckbaren Spreizelement besteht, an dessen Stirnseite eine flach gewölbte Kappe zur Halterung des Laufrades auf der Achse bzw. zur Abdeckung der Rohrmündungsöffnung angeordnet ist. Aufgrund dieser Ausgestaltung eines derartigen Halterungselementes wird erreicht, daß der Rohrüberstand über die Laufradebene hinaus nicht mehr gegeben ist, da die flach gewölbte Kappe in der Laufradebene liegt. Diese Kappe an der Stirnseite des Spreizelementes kann dabei sogar versetzt hinein in die Erstreckungsebene des Laufrades liegen, so daß hinsichtlich der flach gewölbten Kappenfläche im Achsbereich keine Angriffspunkte bzw. störenden Achsvorsätze mehr vorhanden sind, die die Rangierbarkeit des Handwagens bzw. der Karre behindern und die zu Verletzungsgefahren beim Verfahren eines derartigen Handwagens bzw. einer derartigen Karre führen können.

Nach einer vorteilhaften Weiterbildung der Erfindung ist das Spreizelement mittels eines Spannelementes gegen die Innenwandung des Achsrohres spreizbar. Die Befestigung bzw. die Verspannung des Halterungselementes in das Achsrohr zu verlegen, bringt den Vorteil, daß die Halterungskräfte nicht mehr außen liegend an dem Laufrad angebracht werden müssen. Dazu weist das Formteil eine axial verlaufende Bohrung auf, in der das Spannelement zur radialen Verpressung des Spreizelementes angeordnet ist. In vorteilhafter Weise ist dabei das Spannelement als Spannschraube oder Spannteil ausgebildet; dabei werden auch Spreizdübel eingesetzt. Insbesondere ist es bei der Ausführungsform mit Spannkeil von Vorteil, wenn der Spannkeil über ein in der Kappe gelagertes Exzentergetriebe zur Übertragung der Aufspreizkräfte des Spreizelementes in der Bohrung verschiebbar ist. Dabei ist zur Bildung des Exzentergetriebes quer zur Keilspitze ein Bolzen befestigt, der exzentrisch in einer mittels eines Hebels schwenkbaren Hülse gelagert ist. Die Ausgestaltung des Halteelementes mittels eines über ein Exzentergetriebe verspannbaren Spannkeils bringt den Vorteil mit sich, daß insbesondere die Montierbarkeit bzw. Demontierbarkeit des Laufrades auf einfache und schnelle Weise durchführbar ist. Dabei braucht letztendlich nur der in der Kappe verlagerte Schwenkhebel umgelegt werden, um das Halterungselement entweder aus dem Achsrohr zu lösen oder in dem Achsrohr zu verspannen.

In einer zweckmäßigen Weiterbildung weist das Spreizelement radial angeordnete Nuten mit im Bodenbereich angeordneten Schlitzöffnungen auf. Aufgrund dieser Anordnung wird eine radial punktuelle Verspannung des Spreizelementes an der Innenwandung des Achsrohres erreicht. Zusätzliche Schlitzöffnungen insbesondere im Bodenbereich der Nuten vorzusehen, erleichtert insbesondere, die Spannkräfte mit den Spannelementen aufzubringen. In einer besonders vorteilhaften Ausgestaltung weist die Kappe innenseitig eine umlaufende Nut auf, die etwa der Wandstärke der rohrförmig ausgebildeten Achse entspricht. Beim Aufsetzen des Halterungselementes auf das Rohrende drückt sich insbesondere die Stirnseite der Rohrwandung in die eingeformte umlaufende Nut der Kappe ein, so daß die flach gewölbte Kappe kaum über das Endrohr hinaus steht. In korrespondierende Ausnehmungen in dem Achsrohr eingreifende Sperrnoppen auf der Außenseite der Spreizelementen können als Zusatz-Sicherungen gegen ein Abziehen der Räder eingesetzt werden. Dabei sind nach einer besonders vorteilhaften Ausgestaltung der Erfindung das aus Spreizelement und Kappe ausgebildete Formteil aus einem Spritzgußformteil hergestellt, welches auch die für die Verspannung erforderliche Verformung eines Spreizelementes zuläßt.

Nach einer vorteilhaften Ausgestaltung der Erfindung umfaßt die Lagerung der Vorderachse ein den Drehzapfen aufnehmendes vertikales Lagerrohr, welches mittig an einem die vorderen angewinkelten Stützen verbindenden Steg befestigt ist. Die Lagerung der Vorderachse kann ein vertikales Rohr umfassen, in welches der Drehzapfen der Vorderachse eingreift. Dabei erfolgt die Lagerung der Vorderachse auf einem längerem, der Länge des Lagerrohrs entsprechenden Abschnitt, so daß die Vorderachse gegen Kippbeanspruchungen in vertikalen Ebenen gut abgestützt ist. Dabei ist das Lagerrohr selbst mittig an einem die vorderen angewinkelten Stützen verbindenden Steg befestigt. Das Lagerrohr selbst kann dabei auch mittig zwischen einem geteilten Steg schweißverbindend angebracht sein. Die Halterung der Hinterachse gestaltet sich dabei derart, daß die hinteren Stützen direkt auf bzw. an der Hinterachse befestigt sind. In einer vorteilhaften Weiterbildung wird das Drehlager für die Deichsel gebildet durch ein den mit der Deichselaufnahme verbundenen Drehzapfen mit hinreichendem Spiel aufnehmendes Lagerrohr, in das zumindest an einem, vorzugsweise an beiden Enden Paßeinsätze aus Kunststoff eingeführt sind, die den Drehzapfen lagern. Zur Erleichterung der Drehbewegung von Vorderachse mit Deichsel ist auf den Drehzapfen eine Distanzhülse vorgesehen, deren den Drehzapfen etwa formschlüssig umfassender Hülsenkörper mit seinen einen Ende gegen die Stirnfläche des unteren der Lagerstützen anliegt, so daß eine Verringerung der Lagerreibung und somit eine Leichtgängigkeit gegeben ist, wobei bei entsprechender Kunststoff-Wahl auch der Verschleiß verringert wird. Um ein Verdrehen der Distanzhülse gegenüber dem Drehzapfen zu unterbinden, ist der Hülsenkörper mit einer wulstartigen, sich ein- oder auch beidseitig an die Vorderachse anlegenden Anformung versehen.

Nach einer weiteren Aufgabenstellung der Erfindung wird vorgesehen, daß gegenüber einer aus dem Stand der Technik bekannten rechtwinkligen Befestigung der Griffstangen an der Zugstange einer Deichsel die Griffstangen ergonomisch günstiger an der Zugstange der Deichsel befestigt werden, um auf diese Weise die beim Ziehen eines derartigen Handwagens auftretenden zerrenden Zugkräfte im Arm zu unterbinden. Die Deichsel, mit der dieser Handwagen gezogen wird, weist an dem freien Ende der Zugstange stumpf auf diese aufgesetzte abgewinkelte Griffstangen auf, die hinsichtlich ihrer Winkelstellungen zur Zugstange der Deichsel etwa der entlasteten Handstellung eines Menschen entsprechen. Aufgrund dieser ergonomisch günstigen Ausgestaltung der Griffstangen wird erreicht, daß der Handwagen von einem Menschen gezogen werden kann, dessen Armgelenk beim Ziehen des Handwagens weder verdreht noch angewinkelt gehalten werden muß, so daß die Zugkraft entsprechend der natürlichen Haltung des Arms in die Schulter eingeleitet wird und zerrende Torsionskräfte beim Ziehen des Handwagens dadurch unterbunden werden. Zur ergonomisch günstigen Zugkraftübertragung verlaufen die Griffstangen winklig; die Enden der Griffstangen liegen oberhalb der Zugstangen und die Griffstangen bilden mit der Zugstange in der Vertikalebene durch die Deichsel einen Winkel, der im Bereich von 2° bis 10° liegt; in einer rechtwinklig dazu liegenden Ebene bilden die Griffstangen mit der Zugstange einen Winkel kleiner 90°, wobei der Winkel-Bereich von 85° bis 65° bevorzugt ist; die Griffstangen bilden dabei einen in Zugrichtung weisenden Pfeil. Eine solche Raumwinkelung der Griffstangen verhindert Verkrampfungen im Handgelenk, Unterarm- und Ellenbogengelenk und erleichtert das Ziehen. Zur besseren Griffigkeit der Griffstangen sind auf den Griffstangen für die Handflächen entsprechend haptisch angenehme und passende Griffelemente aufgeschoben.

Das Wesen der Erfindung wird an Hand der in den Figuren 1 bis 24 dargestellten Ausführungsbeispielen näher beschrieben; dabei zeigen:
- Fig. 01:: Handwagen ohne Aufbauten (Schema-Perspektive);
- Fig. 02:: Handwagen mit Pritschenplatte (Schema-Perspektive);
- Fig. 03:: Handwagens mit aufgebautem Kasten gemäß der Schnittlinie III/III (Fig. 2), teil-geschnitten;
- Fig. 04:: Handwagen ohne Pritschenplatte und ohne Seiten-Front- und Rückwand (Schema-Darstellung) Fig. 4a: Aufsicht, Fig. 4b: Seitansicht;
- Fig. 05:: Frontansicht des Handwagens mit eingesetzten Seitenwänden und Frontplatte (abgebrochen);
- Fig. 06:: Einzelheit Seitenwandsicherung von vorn gesehen, teil-geschnitten;
- Fig. 6a:: Alternative Stecksicherung Rundrohrstütze;
- Fig. 07:: Einzelheit Seitenwandsicherung entsprechend Fig. 6;
- Fig. 08:: Rückansicht des Handwagens mit eingesetzten Seitenwänden und Rückplatte (abgebrochen);
- Fig. 09:: Einzelheit Seitenwandsicherung von hinten gesehen, teil-geschnitten,
- Fig. 9a:: Alternative Stecksicherung Rechteckrohrstütze;
- Fig. 10:: Einzelheit Seitenwandsicherung von hinten gesehen, teil-geschnitten,
- Fig. 11:: Einzelheit Front- bzw. Rückwandsicherung, Seitansicht;
- Fig. 12:: Einzelheit gemäß Fig. 11, Aufsicht;
- Fig. 13:: Einzelheit Vorderachse mit Lagerstütze, Vorderrad und Deichselschwenklager;
- Fig. 14:: Einzelheit Lagerstütze Vorderrad (geschnitten);
- Fig. 15:: Einzelheit Distanzhülse Deichsellager;
- Fig. 16:: Einzelheit Hinterachse mit Lagerstütze Hinterrad;
- Fig. 17:: Einzelheit Lagerstütze Hinterrad Auf- und Frontansicht.
- Fig. 18:: Halterungselement, Teilschnitt, Schema-Perspektive;
- Fig. 19:: Aufsicht in Richtung des Spreizelementes;
- Fig. 20:: Halterungselement mit Spannkeil, teil-geschnitten;
- Fig. 21:: Aufsicht auf die flach gewölbte Kappe des Halterungselementes gemäß der Figur 20;
- Fig. 22:: Spreizelement entsprechend Fig. 21, Aufsicht;
- Fig. 23:: Deichsel, teil-geschnittene Seitenansicht;
- Fig. 24:: Deichsel des Handwagens mit entsprechend dargestellter Armhaltung, Aufsicht.

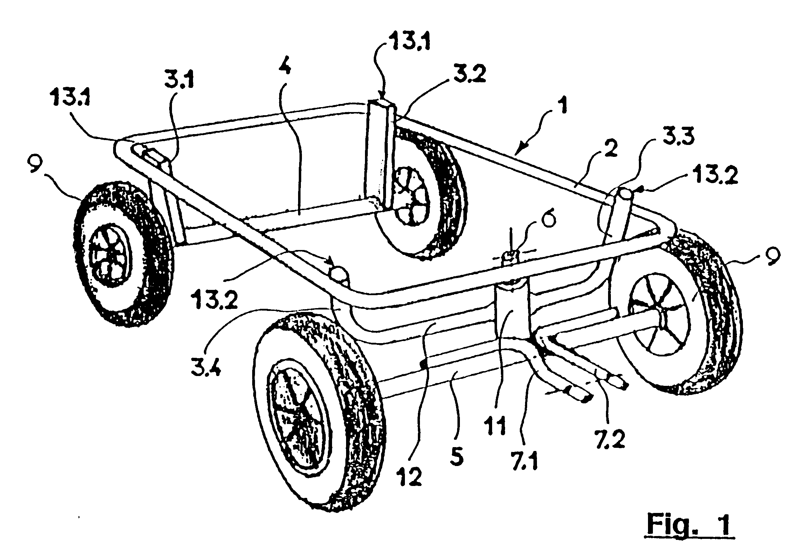

Der in der Figur 1 als ganzes mit 1 bezeichnete Handwagen umfaßt einen erkennbaren Rechteckrohrrahmen 2, der einen rechteckigen, in einer horizontalen Ebene mit den längeren Seiten in Fahrtrichtung des Handwagens 1 verlaufenden Teil mit abgerundeten Ecken sowie mit innen befestigten Stützen 3.1, 3.2, 3.3 und 3.4 aufweist. Unter dem hinteren Endbereich des Rechteckrohrrahmens 2 ist eine Hinterachse 4 befestigt, wobei im vorderen Bereich des Rechteckrohrrahmens 2 eine Vorderachse 5 schwenkbar gelagert angebracht ist. Etwa mittig ist die Vorderachse 5 um einen vertikalen Drehzapfen 6 schwenkbar gelagert. An der Vorderachse 5 sind etwa rechtwinklig gebogene Rohrstücke 7.1 und 7.2 angebracht, wobei einer der Schenkel der Rohrstücke 7.1 und 7.2 auf der Vorderachse 5 angeschweißt ist, und die freistehenden Schenkelabschnitte der Rohrstücke 7.1 und 7.2 in Fahrtrichtung des Handwagens 1 zur Anlenkung einer Deichsel 8 eine Lagerstelle bilden.

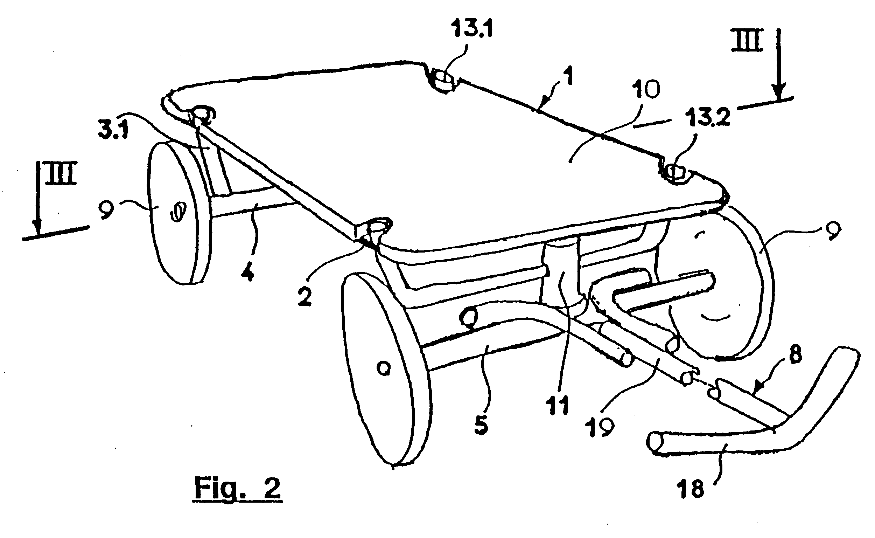

Auf den beiden Achsen 4 und 5 sind jeweils Laufräder 9.1, 9.2 endseitig lagernd befestigt. Zur Verbindung des Rechteckrohrrahmens 2 mit der Hinterachse 4 und der Vorderachse 5 sind an der Innenseite insbesondere an den längserstreckenden Seiten des Rechteckrohrrahmens 2 die Stützen 3.1, 3.2, 3.3 und 3.4 unter einer Winkelneigung an dem Rohrrahmengestell 2 mittels einer Schweißverbindung befestigt. Die Stützen 3.1, 3.2, 3.3 und 3.4 sind in dem Rechteckrohrrahmen 2 derart befestigt, daß ein kurzer Endbereich der Stützen 3.1, 3.2, 3.3 und 3.4 über den Rechteckrohrrahmen 2 hinausragt. Dabei entspricht der herausragende Teil der Stützen 3.1, 3.2, 3.3 und 3.4 in etwa der Stärke bzw. der Dicke der auf dem Rechteckrohrrahmen 2 aufliegenden Pritschenplatte 10, wie insbesondere in der Figur 2 dargestellt.

Die Lagerung der Vorderachse 5 umfaßt ein den Drehzapfen 6 aufnehmendes Lagerrohr 11, welches mittig in einem die vorderen angewinkelten Stützen 3.3 und 3.4 verbindenden Steg 12 befestigt ist. Dabei kann der verbindende Steg 12 geteilt ausgebildet sein, und die Stegteile können mittig das Lagerrohr 11 zwischen sich aufnehmen und mit diesem fest verschweißt sein. Zur Halterung der Hinterachse 4 sind die hinteren Stützen 3.1 und 3.2 direkt auf bzw. an der Hinterachse 4 befestigt. Dabei weisen die hinteren Stützen 3.1 und 3.2 ein Rechteckprofil auf, wohingegen die vorderen Stützen 3.3 und 3.4 aus einem Rundprofil bestehen. Die als Rechteckprofil und Rundprofil ausgebildeten Stützen 3.1, 3.2, 3.3 und 3.4 bilden gleichzeitig die erfindungsgemäßen Einstecköffnungen 13.1 und 13.2 zur Aufnahme von außen liegenden Einsteckteilen 14, die an den Seitenwänden des aufzubauenden Kastens angeordnet sind. Dabei ist jeweils das der Hinterachse 4 zugeordnete Einsteckteil 14 entsprechend als Rechteckform und das der Vorderachse 5 zugeordnete Einsteckteil 14 der Seitenwand 15 entsprechend als Rundprofil ausgestaltet. Zur einfacheren und leichteren Einführung bzw. Einfädelung der Einsteckteile 14 ist deren Ausformung insbesondere keilartig bzw. konisch ausgebildet.

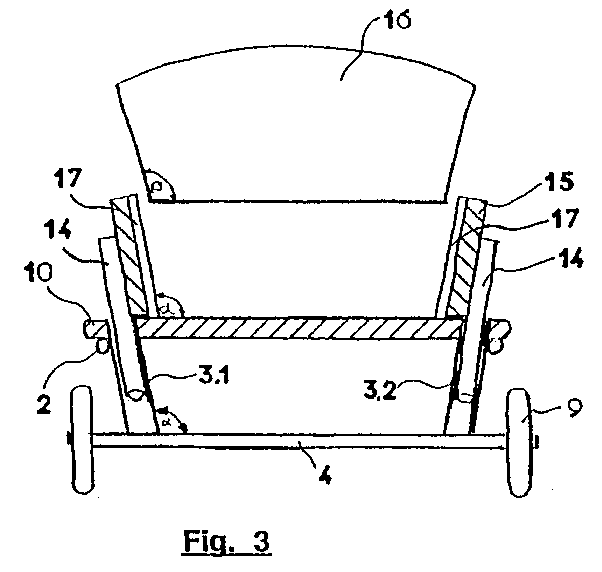

Wie aus der Figur 3 erkennbar ist, greifen die Einsteckteile 14 der Seitenwand 15 in die horizontal in einer gleichen Ebene liegenden Einstecköffnungen 13.1 und 13.2 der Pritschenplatte 10 ein. Dabei verlaufen die Seitenwände 15 unter einem kleineren entsprechend der angeordneten Stützen 3.1, 3.2, 3.3, und 3.4 vorgegebenen Winkel als die Seitenkanten der Stirn- und Rückwand 16.1, 16.2 zur Bildung des Kastens auf der Pritschenplatte 10. Die Stirn- und Rückwand 16 wird wie in bekannter Weise in aufgesetzte Leisten 17 an der Innenseite der Seitenwände 15 bildenden Nuten eingesteckt. Aufgrund der unterschiedlichen Winkelausgestaltung von Stirn- und Rückwand 16.1, 16.2 zu der Winkelung der Stützen 3.1, 3.2, 3.3 und 3.4 wird erreicht, daß der auf der Pritschenplatte 10 aufgesetzte Kasten unter einer leichten bzw. geringfügigen Verspannung aufgesetzt wird. Zum besseren Transport, aber auch zum Verstauen kann der Handwagen 1 in einfacher Weise zerlegt werden: Zunächst sind die Stirn- und Rückwand 16.1, 16.2 zwischen den beiden Seitenwänden 15 herauszuziehen und danach können die Seitenwände aus den Stützen 3.1, 3.2, 3.3 und 3.4 herausgezogen werden, so daß eine ebene Pritschenplatte 10 gebildet wird. Dabei können die Seitenwände 15 beispielsweise unterhalb der Pritschennplatte 10 auf die Hinterachse 4 und den verbindenden Steg 12 untergeschoben werden, so daß eine Unverlierbarkeit der Seitenwände 15 beim Transport von sperrigen Gütern gegeben ist. Zu dem können die Stirn- und Rückwand 16.1, 16.2 in gleicher Weise unterhalb der Pritschenauflagefläche 10 verstaut werden.

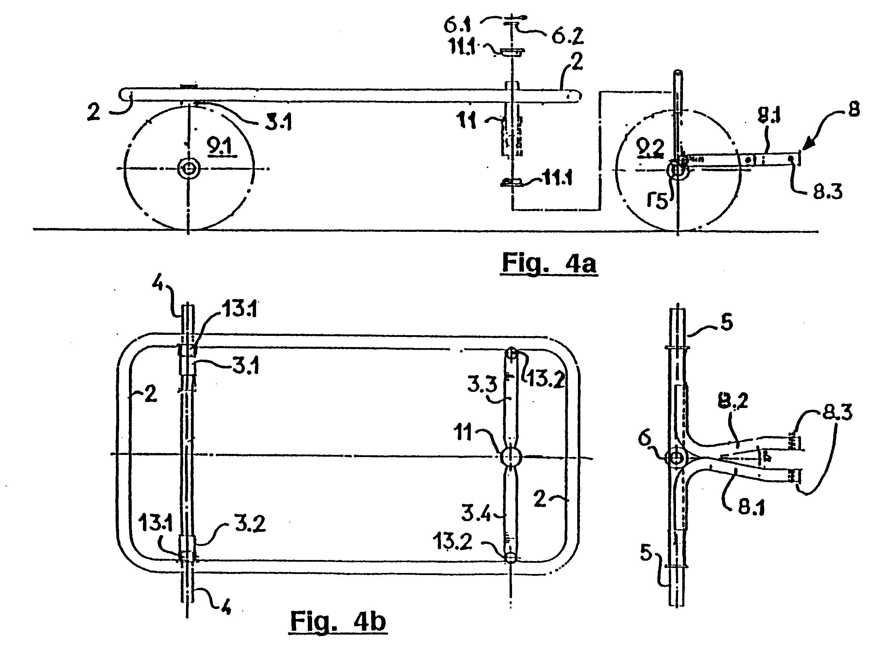

Die Figuren 4a und 4b zeigen schematisiert eine Aufsicht und eine Seitansicht des Handwagens, wobei die Pritschenplatte sowie Seiten-Front- und Rückwand der besseren Darstellung wegen weggelassen wurden. Der umlaufende Rechteckrohrrahmen 2, der an sich die Ladeplattform trägt, ist mit quer verlaufenden Stützen 3,1, 3.2, 3.3 und 3.4 versehen, von denen die ersten beiden die Hinterachse 4 tragen und die letzten beiden eine Lagerhülse 11, in die der Drehzapfen 6 der Vorderachse 5 eingeführt wird (hier auseinander gezeichnet), der von den Paßeinsätzen 11.1 geführt und gelagert ist. Dazu ist die Lagerhülse 11 vorteilhaft gebildet von einem Rohrstück, in dem der Drehzapfen 6 ein hinreichendes Spiel aufweist; beidendig sind die Paßeinsätze 11.1 vorgesehen, die den Drehzapfen 6 aufnehmen und ihn umfassend lagern; der Drehzapfen wird mit einem Federstift 6.2 fixiert, wobei die Scheibe 6.1 einen direkten Kontakt von Federstift 6.1 und oberen Paßeinsatz 11.1 unterbindet. Die Vorderachse 5, in deren Mitte der Drehzapfen 6 angeordnet ist, ist mit aufgesetzten, als Rohrstücke 8.1 und 8.2 ausgebildeten, um etwa 90° gebogenen Trägern versehen, die eine gabelartige Lagerstelle für die Aufnahme der Zugstange 19 der Deichsel 8 bilden, die mit einem Bolzen, der durch die Bohrungen 8.3 geführt ist, an die Lagerstelle angelenkt ist. Die Stützen 3.1 und 3.2 sind als aufrecht stehende Rechteckrohre und die Stützen 3.3 und 3.4 als aufgebogene Rundrohre ausgebildet, so daß die freien Ende in einem steilen Winkel aufragen. Ihre oberen Enden sind offen und bilden die Einstecköffnungen 13.1 bzw. 13.2 für die Einsteckteile 14 der Seitenwände 15.

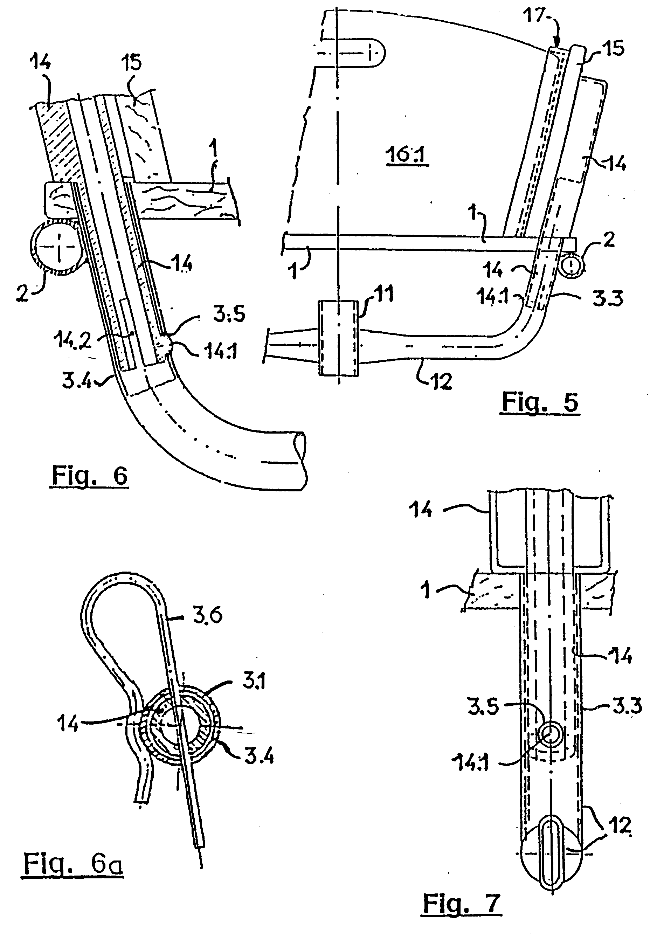

Die Figur 5 bis 7 zeigen die Frontseite eines Aufbaues eines Handwagens nach der Erfindung von vorn gesehen, wobei Vorderachse mit Rädern und Deichsel zur Vereinfachung nicht näher dargestellt sind. Die Pritschenplatte 1 wird von dem umlaufenden, rechteckförmigen Rahmen 2 getragen, an den beidseits der Steg 12 angesetzt ist, der mittig das vertikale Lagerrohr 11 für den Drehzapfen der Vorderachse (nicht näher dargestellt) aufweist. Die aufwärts gebogenen Teile des Steges 12 bilden Steckhülsen 3.3 bzw. 3.4, in deren Öffnungen die Einsteckteile 14 der beiden Seitenwände 15 eingesetzt werden. Beide Seitenwände weisen genutete Leisten 17 auf, in die die Frontwand 16.1 eingesetzt wird. Wie aus Fig. 2 und 3 erkennbar, sind die Enden der Einsteckteile 14 nahe ihren freien Enden mit einer zur Innenseite des Handwagens gerichteten Rastnase 14.1 versehen, die in die in den Steckhülsen vorgesehenen Löcher 3.5 eingreifen. Zur besseren Handhabung weisen die Einsteckteile 14 Schlitze 14.2 auf, die ihnen eine gewisse Nachgiebigkeit verleihen, so daß deren Einführen bis zum Einrasten der Nasen 14.1 in die Öffnungen 3.5 erleichtert wird. Die Einsteckteile 14 weisen dabei gegenüber den Steckhülsen ein gewisses Spiel auf, so daß die Seitenwände 15 zum Entriegeln nach innen gedrückt werden können, also gegen die bei Beladung wirkenden Kräfte, bis die Nasen 14.1 freigekommen sind. Durch die vorgegebene Richtung wird eine Selbstentriegelung ausgeschlossen.

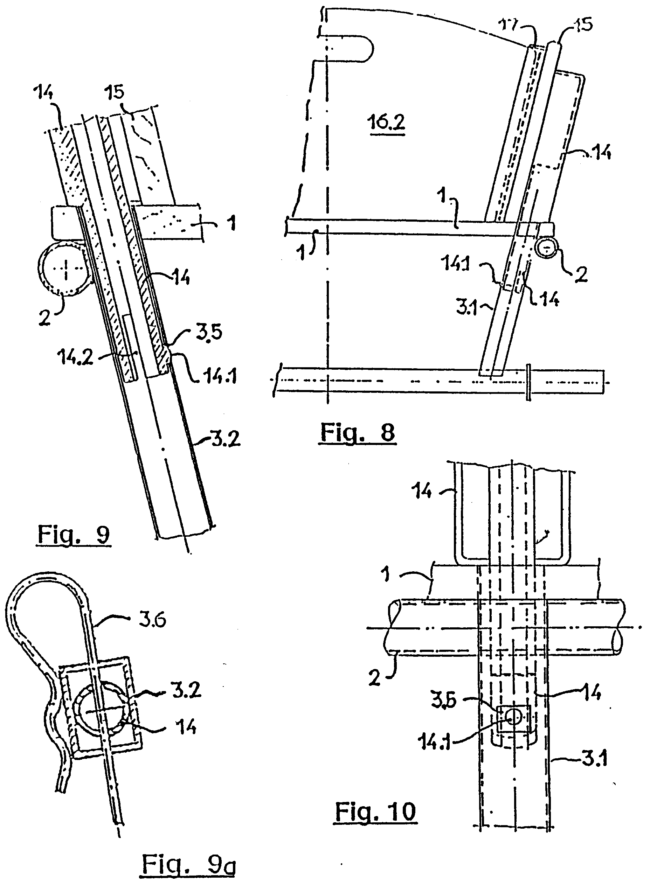

Die Figuren 8 bis 10 zeigen die gleichen Verhältnisse für die rückwärtige Seite: Hier ist der umlaufende Rechteckrohrrahme 2 (geschnitten) des Handwagens 1 dargestellt, der mit Einsteckhülsen 3.1 bzw. 3.2 versehen ist, in die die Einsteckteile 14 der Seitenwände 15.1 und 15.2 eingesteckt werden. Diese Einsteckteile 14 sind -wie bereits beschrieben- mit nach innen gerichteten Nasen 14.1 ausgerüstet, die in zur Mittenebene des Handwagens 1 gerichtete Öffnungen 3.5 der Einsteckhülsen einrasten, und sie weisen zum Sichern eines elastischen Nachgebens rechtwinklig zur Achsrichtung der Nasen 14.1 ausgerichteten Schlitze 14.2 auf, die zumindest bis in die Höhe dieser Nasen 14.1 reichen. In den Figuren 6a und 9a sind Querschnitte durch die Stützen mit alternativer Sicherung am Beispiel der Stützen 3.1 und 3.3 dargestellt, wobei dies analog für die Stützen 3.2 und 3.4 gilt. Hier weisen Stützen 3.1 und Einsteckteil 14 fluchtende Bohrungen auf, durch die ein Federstecker 3.6 gesteckt ist, der das Einsteckteil 14 in der Stütze fixiert, und der durch seine Ausformung in gesteckter Position gesichert ist.

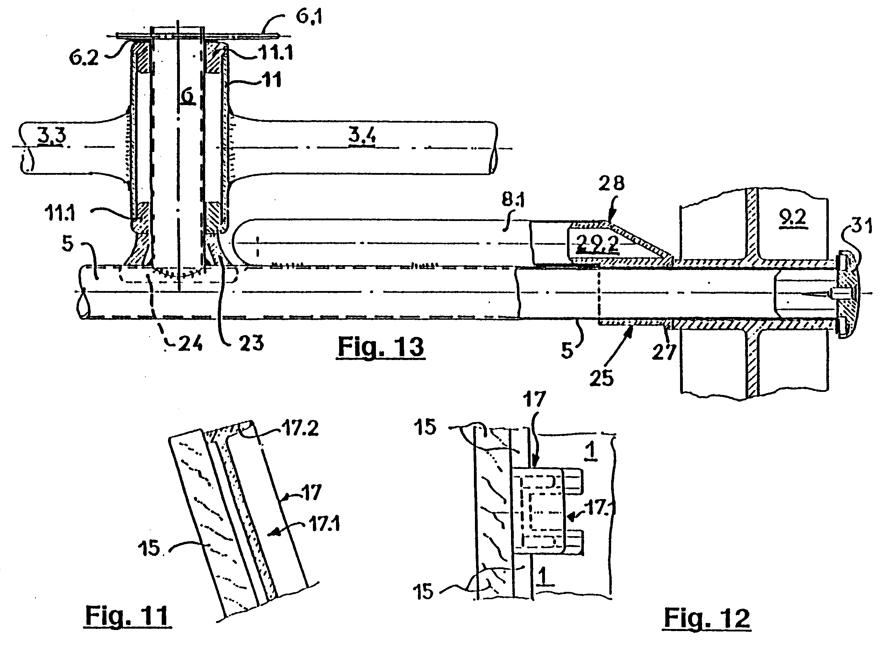

Wie insbesondere die Figuren 8, 10 sowie 11 und 12 erkennen lassen, sind die Seitenwände 15 -wie auch im Bereich der Frontseite- mit einer genuteten Leiste 17 versehen, in die hier die Rückwand 16.2 eingesetzt wird. Da die Seitenwände 15 nach außen geneigt sind und die Front- und Rückwand 16.1 und 16.2 dieser Neigung angepaßte Seitenkanten aufweisen, ist das Einsetzen äußerst einfach, da Front- und Rückwand 16.1 und 16.2 erst im letzten Bereich des Einsetzens in diese Nuten 17.1 eingreifen, jedoch eingesetzt mit ihren jeweiligen Außenkanten nach außen drücken und als Gegenhalter der Seitenwände 15 wirken. Die Figuren 11 und 12 zeigen dabei die Sicherungen für die eingesetzten Seitenwände 15: Ein Vorsprung 17.2 als oberer Abschluß der Nuten 17.1 verhindert ein unbeabsichtigtes Ziehen der Front- bzw. Rückwand 16.1 bzw. 16.2, so daß diese gegen zufälliges Öffnen geschützt sind und daher auch die Seitenwände 15 im bestimmungsgemäßen Gebrauch ständig nach außen drängen.

In der Figur 13 ist die (hier nur einseitig dargestellte) Vorderachse 5 dargestellt, mit einer eingesetzten Lagerstütze 25' für das Vorderrad 9.2 und das Deichselschwenklager mit Lagerrohr 11 und Paßeinsätzen 11.1 sowie mit eingeführtem Drehzapfen 6 mit aufgesetzter Distanzhülse 23 für das Deichselschwenklager, wobei sich (bei der hier in Frontansicht dargestellten Distanzhülse gestrichelt angedeutet) eine wulstförmige Anformung an die durchgehende Vorderachse 5 anlegt, wobei die untere Stirnfläche des Lagerrohres 11 auf der oberen Stirnfläche der Distanzhülse 23 abgestützt ist. Der Drehzapfen 6 ist auf der oberen Seite des Lagerrohres 11 mit einem weiteren Paßeinsatz 11.1 gefaßt und geführt, und es wird außerhalb mit einem Stift 6.1 gehalten, wobei eine Scheibe 6.2 zwischen Stift 6.1 und Paßeinsatz 11.1 vorgesehen ist. Die (in Seitansicht geschnitten dargestellte) Lagerstütze 25' begrenzt den Aufschiebeweg des Rades 9.2, das von außen mit einem Halterungselement 31 gehalten und fixiert ist. Dabei läuft die Nabenhülse des Rades 9.2 auf dem Anlagebund 27 der Lagerstütze 25', so daß ein leichter Lauf erreicht wird. Um die Position der Lagerstütze 25' zu fixieren und ein Mitdrehen zu unterbinden, ist eine Sperrnase 28 vorgesehen, die im Falle der hier dargestellten Vorderachse 5 als stopfenförmige Ansätze 29.2 ausgebildet sind, die in die Enden der die Aufnahme für die Deichsel 8 bildenden Rohrstücke 8.1 eingreifen, so daß mögliche Verletzungsgefahren durch freiliegende scharfe Kanten ausgeschlossen werden.

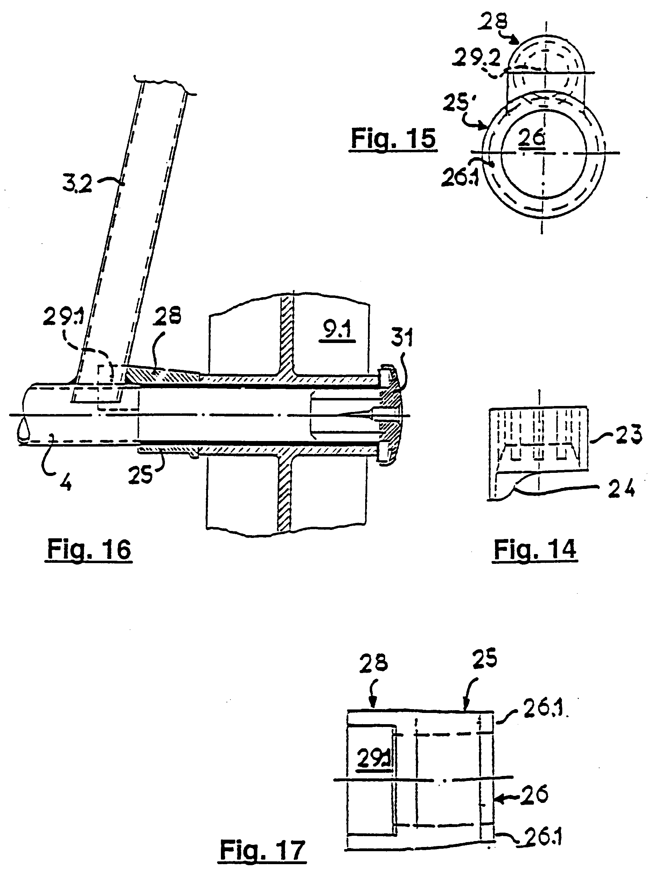

Die Figur 14 zeigt die Distanzhülse 23 in Seitansicht, die die wulstartige Anformung 24 erkennen läßt, die sich gegen die Vorderachse 5 legt, und so einen Formschluß herstellt, der ein Mitdrehen mit der Vorderachse erzwingt. Beim Schwenken der Deichsel verdrehen sich dabei die Distanzhülse 23 und der untere der Paßeinsätze gegeneinander; beide bestehen vorteilhaft aus Kunststoff, wobei die Kunststoffe so gewählt werden, daß eine Leichtgängigkeit erreicht wird. Die Figur 15 zeigt eine Seitansicht der Vorderrad-Lagerstütze 25' mit der Achsaufnahme 26 und dem Lagerbund 26.1, wobei an den Körper der Lagerstütze 25' eine Sperrnase 28 angeformt ist, die im Fall der Vorderrad-Lagerstütze 25' einen stopfenförmiger Ansatz 29.2 bildet.

Die Figur 16 zeigt -wie auch die Vorderachse- eine einseitig dargestellte- Hinterachse 4 mit Lagerstütze 25 für das Hinterrad 9.1. Die mit der Stütze 3.2 verbundene Hinterachse 5 trägt auf ihrem freien Achsstummel das eine Hinterrad 9.1, dessen (nicht näher bezeichnete) Nabe an dem Bund 26.1 der Lagerstütze 25 anliegt und so reibungs- und verschleißarm laufen kann. Diese Reibungs- und Verschleißarmut setzt voraus, daß die Lagerstütze 25 gegen Verdrehen gesichert ist; dazu ist eine Sperrnase 28 vorgesehen, die hier mit einer U-förmigen Anformung 29.1 versehen ist, die die Stütze 3.2, die auf der Hinterachse in einem gewissen Neigungswinkel aufsteht (wie gestrichelt angedeutet) U-förmig umgreift. Die Figur 17 zeigt diese Lagerstütze 25 in Aufsicht; hier ist die U-förmige Anformung 29.1 zu erkennen, unter der sich der Körper der Lagerstütze 25 befindet, dessen Inneres als zylinderförmige Achsaufnahme 26 ausgebildet ist.

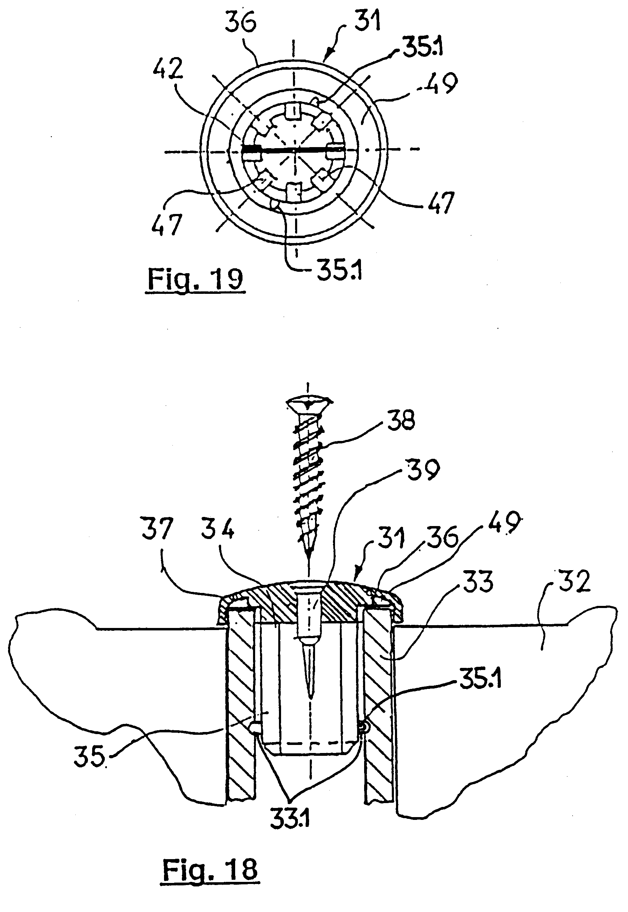

Das in der Figur 18 dargestellte Halterungselement 31 für ein wälz- oder gleitgelagertes Laufrad 32 ist an einer rohrförmig ausgebildeten Achse 33 eines nicht näher dargestellten Handwagens oder einer Karre befestigt. Das Halterungselement 31 besteht dabei aus einem einstückigen Formteil 34, welches sich aus einem Spreizelement 35 und einer daran angeformten Kappe 36 zusammensetzt. Das Spreizelement 35 wird dabei in eine Rohrmündungsöffnung 37 der Achse 34 eingeführt, wobei die angeformte Kappe 36 sich auf den Rand der Rohrmündungsöffnung 37 der Achse 33 legt. Zur Verspannung des Spreizelementes 35 ist dieses mittels einer Spannschraube 38 gegen die Innenwandung des Achsrohres 33 spreizbar. Zur Aufnahme des Spannelementes 38 in dem Formteil 34 verläuft eine axial verlaufende Bohrung 39 in dem Halterungselement 31. Um das Spreizelement 35 zu spreizen wird als Spannelement 38 eine Schraube in das Formteil 34 eingedreht. Die Bohrung 39 verläuft dabei in Achsrichtung leicht konisch, so daß sich die Schraube zur Spreizung in das Fleisch des Spreizelementes 35 eindreht und dabei das Spreizelement 35 aufweitet. Auf der Außenseite des Spreizelementes vorgesehene Sperrnoppen 35.1 rasten in korrespondierende Ausnehmungen, z.B. eine Ringnut 33.1 oder eine Bohrung durch die Wandung der Achse 33, ein und verhindern ein ungewolltes Lösen des Rades.

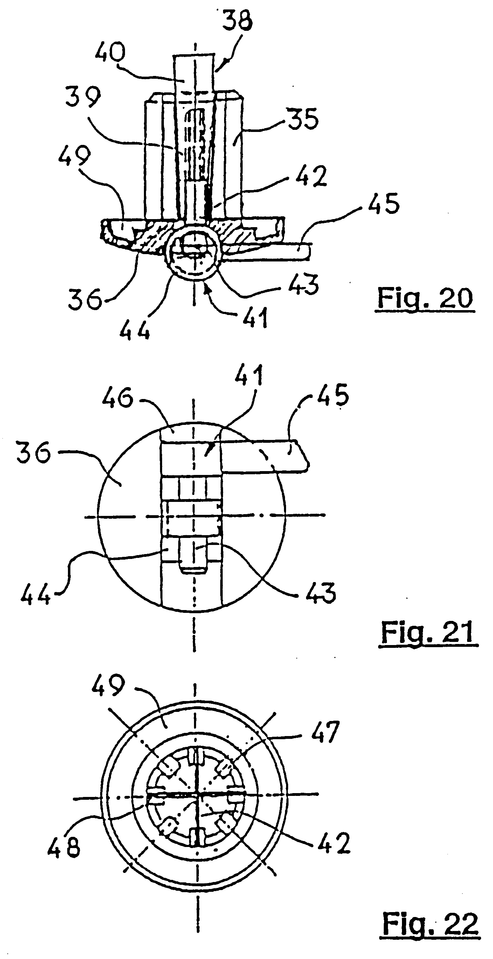

Wie die Figur 20 erkennen läßt, werden bei dem Halterungselement 31 die Spreizkräfte mittels eines in der Bohrung 39 verschiebbar gelagerten Spannkeils 40 aufgebracht. Zur Einleitung der Spannkraft ist der Spannkeil 40 über ein in der Kappe 36 gelagertes Exzentergetriebe 41 zur Übertragung der Aufspreizkräfte in der Bohrung 39 verschiebbar angeordnet. Das Exzentergetriebe 41 besteht dabei aus einem quer zur Keilspitze 42 verlaufenden Bolzen 43, der direkt mit der Keilspitze 42 verbunden ist. Dabei ist der Bolzen 43 exzentrisch in einer schwenkbar gelagerten Hülse 44 angeordnet. Mit der Hülse 44 ist ein Hebel 45 verbunden, mit dem die Verschwenkbarkeit der Hülse 44 vollzogen werden kann. Der Bolzen 43 sowie die aufnehmende Hülse 44 und der Hebel 45 sind in Ausformungen 46 der Kappe 36 eingelassen, so daß insbesondere das Exzentergetriebe 41 nur wenig über den gewölbten Bereich der Kappe 36 hinausragt.

Wie in den Figuren 19 und 22 dargestellt, weist das Spreizelement 35 radial angeordnete Nuten 47 mit im Bodenbereich angeordneten Schlitzöffnungen 48 auf. Die Anordnung der radialen Nuten 47 in Verbindung mit den Schlitzöffnungen 48 erleichtern in vorteilhafter Weise die aufzubringende Spreizarbeit, da die Verformung sich nicht über einen Vollkörper erstrecken muß sondern lediglich an den durch die Nuten 47 gebildeten Stegen des Spannelemente 38. Um einen möglichst engen und strammen Sitz der Kappe 36 auf der Stirnfläche des Achsrohres 33 zu erreichen, ist innenseitig in der gewölbten Kappe 36 eine umlaufende Nut 49 eingeformt. Die umlaufende Nut 49 entspricht dabei etwa der Wandstärke der rohrförmig ausgebildeten Achse 33, so daß ein kleiner Endbereich der rohrförmigen Achse 34 von der Kappe 36 ummantelt wird. Aufgrund dieser Nut 49 wird nicht nur erreicht, daß die Kappe 36 sehr eng an der Rohrmündungsöffnung 37 anliegt, sondern auch, daß eine dichtende Verschließung der Rohrmündungsöffnung 37 erreicht wird, damit insbesondere der Hohlraum der Rohrachse 33 vor eintretendem Wasser bzw. Feuchtigkeit geschützt ist. Zur einfachen und kostengünstigen Herstellung wird das Formteil 34 beispielsweise als Kunststoff-Spritzgußformteil hergestellt, welches auch die für die Verspannung notwendige Verformung des Spreizelementes 35 zuläßt.

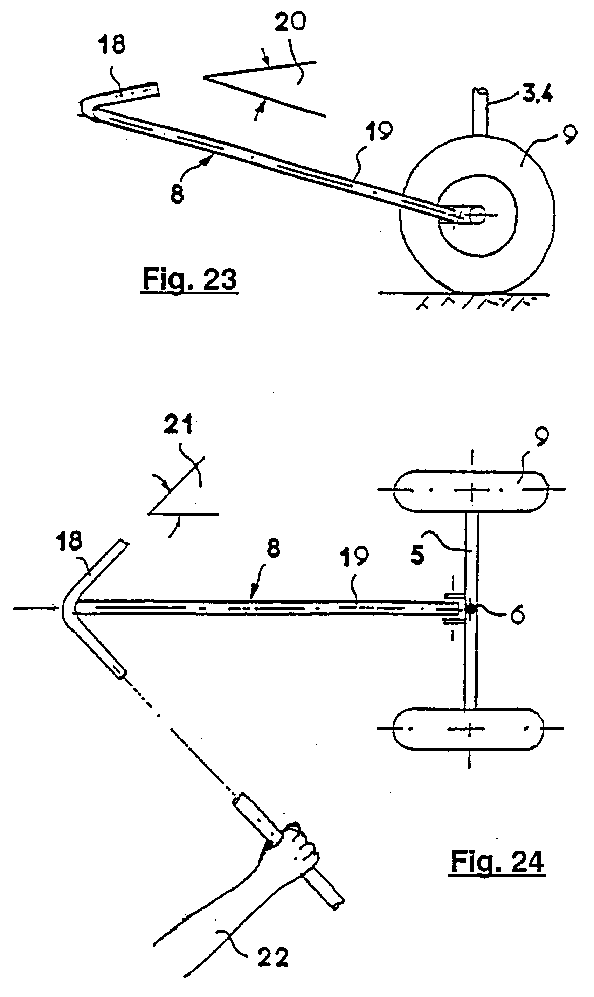

Die für den Handwagen 1 vorgesehene Deichsel 8 ist in den Fig. 23 und 24 dargestellt. Die Deichsel 8 weist dabei endseitig eine abgewinkelte Griffstange 18 auf, die hinsichtlich ihrer Winkelstellungen zur Zugstange 19 der Deichsel 8 etwa einer entlasteten Handstellung 22 eines Menschen entsprechen, wie in der Figur 24 in explosionsartigen Darstellung näher dargestellt. Die abgewinkelten Griffstangen 18 erstrecken sich dabei in einer durch die Zugstange 19 gehenden Vertikalebene so, daß ihre Enden oberhalb des Zugstangenendes liegen; der Winkel 20 liegt dabei im Bereich von 2° bis 10°. In einer rechtwinklig dazu liegenden durch die Zugstange 19 gehenden Ebene bilden die Griffstangen 18 mit der Zugstange 19 einen Winkel 21 kleiner 90°, wobei der Winkelbereich von 85° bis 65° bevorzugt ist. Die Griffstangen 18 bilden so in der Vertikalebene gesehen einen halb-pfeilartigen Haken und sind in der rechtwinklig dazu liegenden Ebene gepfeilt, wobei die Pfeilspitze in Zugrichtung weist. Auf die Griffstangen 18 können entsprechend haptisch angenehm und passend ausgebildete nicht näher dargestellte Griffe geschoben werden. Die ergonomisch günstige Ausgestaltung der Griffstangen 18 ermöglicht, daß der Handwagen 1 von einem Menschen gezogen werden kann, dessen Armgelenk beim Ziehen des Handwagens 1 weder verdreht noch angewinkelt gehalten werden muß, so daß die Zugkraft entsprechend der natürlichen Haltung 22 des Arms in die Schulter eingeleitet wird und somit zerrende und tordierende Kräfte beim Ziehen des Handwagens unterbunden werden.

## Patentansprüche

1. Handwagen nach Art eines Leiterwagens mit Pritschenplatte (10) und Seitenwänden (15) sowie abnehmbaren, über die Pritschenplatte (10) hinausstehenden Stirn- und Rückwand (16), wobei ein als geschlossener, insbesondere aus Rohr gebildeter rechteckiger Rahmen (2) als Auflage der Pritschenplatte (10) vorgesehen ist, unter dessen hinterem Endbereich eine Hinterachse (4) und unter dessen vorderem Endbereich eine um einen in einem mittig angeordneten, vertikalen Drehzapfen (6) schwenkbare, mit einer Deichsel (18) verbundene Vorderachse (5), beide mit Rädern (9), vorgesehen sind, **dadurch gekennzeichnet**, daß der Rahmen (2) mit der Hinterachse (4) über unmittelbar auf bzw. an der Hinterachse (4) befestigten Stützen (3.1, 3.2) und mit der Vorderachse mit ihrem Drehzapfen über L-förmig abgewinkelte Stützen (3.3, 3.4) verbunden ist, wobei die Stützen von innen am Rahmen (2) befestigt sind und um die Dicke dieser Pritschenplatte (10) über den Rahmen so hinausragen, daß sie mit der auf den Rahmen (2) aufgelegten Pritschenplatte (10) bündig abschließen, wobei die Stützen (3.1, 3.2, 3.3, 3.4) zumindest im aufstrebenden Bereich als Rohre mit Einstecköffnungen (13.1, 13.2) für an den Seitenwände vorgesehenen Steckmitteln ausgebildet sind, und wobei Mittel zur Sicherung der abnehmbaren Wände vorgesehen sind.

2. Handwagen nach Anspruch 1, **dadurch gekennzeichnet**, daß die hinteren Stützen (3.1, 3.2) als gerade Rohre ausgebildet sind.

3. Handwagen nach Anspruch 1 oder 2, **dadurch gekennzeichnet**, daß zumindest die Rohrenden mit den Einstecköffnungen der hinteren Stützen (3.1 und 3.2) Rechteckprofile und die der vorderen Stützen (3.3 und 3.4) Rundprofile aufweisen.

4. Handwagen nach den Ansprüchen 1 bis 3, **dadurch gekennzeichnet**, daß an den Seitenwänden (15) außenliegende Einsteckteile (14) angeordnet sind, die in die Einstecköffnungen (13.1 und 13.2) der abgewinkelten Stützen (3.1, 3.2, 3.3, 3.4) einsteckbar sind.

5. Handwagen nach Anspruch 4, **dadurch gekennzeichnet**, daß die Einsteckteile (14) in Einsteckrichtung sich verjüngend verlaufend ausgebildet sind.

6. Handwagen nach Anspruch 4, **dadurch gekennzeichnet**, daß sowohl die zur Aufnahme der Seitenwände (15) vorgesehenen Stützen (3.1, 3.2, 3.3, 3.4) als auch die an den Seitenwänden (15) vorgesehenen Einstecköffnungen zur Aufnahme der Einsteckteile der Seitenwände (15) seitliche Öffnungen (13.1, 13.2) und die an den Seitenwänden vorgesehenen Einsteckteile (14) dazu korrespondierende Nasen (14.1) aufweisen, wobei vorzugsweise die Nasen (14.1) zur Längs-Mittenebene des Handwagens weisend ausgerichtet sind und vorzugsweise einen unter die Oberkante der Öffnungen fassenden Hinterschnitt aufweisen.

7. Handwagen nach Anspruch 6, **dadurch gekennzeichnet**, daß als Sicherungsmittel der Sicherungsstift (3.6) in Art eines Federsteckers mit Federumbug ausgebildet ist.

8. Handwagen nach Anspruch 4, **dadurch gekennzeichnet**, daß die zur Aufnahme der Einsteckteile der Seitenwände vorgesehenen Stützen (3.1, 3.2, 3.3, 3.4) seitliche Öffnungen (22) und die an den Seitenwänden vorgesehenen Einsteckteile (14) dazu korrespondierende Nasen (14.1) aufweisen, wobei vorzugsweise die Nasen (14.1) zur Längs-Mittenebene des Handwagens weisend ausgerichtet sind, und wobei sie vorzugsweise einen unter die Oberkante der Öffnungen fassenden Hinterschnitt (22) aufweisen.

9. Handwagen nach Anspruch 8, **dadurch gekennzeichnet**, daß die Einsteckteile (14) zumindest bis zur Höhe der Nasen (14.1) mit einem etwa rechtwinklig zu deren Achse ausgerichteten Schlitz (14.2) versehen sind.

10. Handwagen nach Anspruch 8 oder 9, **dadurch gekennzeichnet**, daß die Nasenöffnung (3.5) von außen mit einer Blende abgedeckt ist.

11. Handwagen nach den Ansprüchen 1 bis 10, **dadurch gekennzeichnet**, daß die Seitenkanten der in von aufgesetzten Leisten (17) innenseitig an den Seitenwänden (15) gebildeten Nuten einsteckbaren Stirn- und Rückwand (16) zum Schließen des Kastens auf der Pritschenplatte (10) unter einem Winkel (b) verlaufen, der geringfügig größer gehalten ist, als der Winkel (a), unter dem die Stützen (3.1, 3.2, 3.3, und 3.4) am Rechteckrohrrahmen (2) zur Aufnahme der Einsteckteile (14) der Seitenwände (15) angeordnet sind.

12. Handwagen nach einem der Ansprüche 1 bis 11, **dadurch gekennzeichnet**, daß die an den Seitenwänden (15) angeordnete Einsteckschiene (17.1) ein Kopfstück (17.2) als obere Begrenzung aufweist, das Kopfstück teilweise in den Einschiebeweg der Stirn- bzw. der Rückwand (16) ragt.

13. Handwagen nach einem der Ansprüche 1 bis 12, **dadurch gekennzeichnet**, daß auf die Achsstummel Lagerstützen (25; 25') aus Kunststoff aufgeschoben sind, zur Begrenzung der Axialbewegung des aufgesetzten Rades (9.1; 9.2), wobei vorzugsweise die Lagerstützen (25; 25') gegen Verdrehen gesichert sind.

14. Handwagen nach Anspruch 13, **dadurch gekennzeichnet**, daß das die Verdrehungssicherung bildende Sperrmittel der Lagerstütze (25) eine angeformte Nase (28) aufweist, wobei die Nase vorzugsweise als U-förmiger Ansatz ausgebildet ist, und der U-förmige Ansatz mit einer der Stützen (3.1; 3.2; 3.3; 3.4) zusammenwirkt.

15. Handwagen nach Anspruch 14, **dadurch gekennzeichnet**, daß die als Verdrehungssicherung angeformte Nase als stopfenförmiger Ansatz ausgebildet ist, der in ein auf der Achse (4; 5) angeordnetes Rohr (8.1; 8.2) einführbar ist, wobei der Stopfen vorzugsweise spreizdübel-ähnlich ausgebildet ist.

16. Handwagen nach Anspruch 13, **dadurch gekennzeichnet**, daß das die Verdrehungssicherung bildende Sperrmittel (31) als einstückiges Formteil (34) ausgebildet ist, und wobei das Formteil (34) aus einem in die Rohrmündungsöffnung (37) der Achse (33) einsteckbaren Spreizelement (35) besteht, an dessen Stirnseite eine flach gewölbte Kappe (36) zur Halterung des Laufrades (9.1, 9.2) auf dem Achsrohr (33) bzw. zur Abdeckung der Rohrmündungsöffnung (37) angeformt ist.

17. Handwagen nach Anspruch 16, **dadurch gekennzeichnet**, daß das Spreizelement (35) mittels eines Spannelementes (38) gegen die Innenwandung des Achsrohres (33) spreizbar ist, wobei das Spreizelement vorzugsweise als Spreizdübel ausgebildet ist.

18. Handwagen nach den Ansprüchen 16 oder 17, **dadurch gekennzeichnet**, daß das Formteil (34) eine axial verlaufende Bohrung (39) aufweist, in der das Spannelement (38) zur radialen Verpressung des Spreizelementes (35) angeordnet ist.

19. Handwagen nach den einem der Ansprüche 16 bis 18, **dadurch gekennzeichnet**, daß das Spannelement (38) als Spannschraube oder Spannkeil (40) ausgebildet ist, der vorzugsweise über ein in der Kappe (36) gelagertes Exzentergetriebe (41) zur Übertragung der Aufweitungskräfte des Spannelementes (38) in der Bohrung (39) verschiebbar gelagert ist.

20. Handwagen nach Anspruch 19, **dadurch gekennzeichnet**, daß zur Bildung des Exzentergetriebes (41) quer zur Keilspitze (42) ein Bolzen (43) befestigt ist, der exzentrisch in einer mittels eines Hebels (45) verschwenkbaren Hülse (44) gelagert befestigt ist.

21. Handwagen nach einem der Ansprüche 16 bis 20, **dadurch gekennzeichnet**, daß das Spreizelement (35) radial angeordnete Nuten (47) mit im Bodenbereich angeordneten Schlitzöffnungen (48) aufweist.

22. Handwagen nach einem der Ansprüche 16 bis 21, **dadurch gekennzeichnet**, daß die flach gewölbte Kappe (36) innenseitig eine umlaufende Nut (49) aufweist, deren Wandstärke etwa der Wandstärke des Achsrohres (33) entspricht.

23. Handwagen nach einem der Ansprüche 16 bis 22, **dadurch gekennzeichnet**, daß auf der Außenseite des Spreizelementes (35) mindestens ein Sperrnoppen (35.1) vorgesehen ist, der bei eingesetztem und gespreiztem Sperrelement (35) in eine Ausnehmung (33.1) oder eine Bohrung in der Wandung des rohrförmigen Achsstummels (33) eingreift.

24. Handwagen nach einem der Ansprüche 16 bis 23, **dadurch gekennzeichnet**, daß das Formteil (34) als Kunststoffspritzguß-Formteil hergestellt ist.

25. Handwagen nach einem der Ansprüche 1 bis 24, **dadurch gekennzeichnet**, daß das Drehlager der Vorderachse (5) als ein Rohrstück (11) ausgebildet ist, das eine den Schwenkzapfen (6) des Deichselschwenklagers mit Spiel aufnehmende Hülse bildet, wobei beidseitig in das Rohrstück (11) Paßstücke (11.1), die den Schwenkzapfen (6) umschließen und lagern, eingesetzt sind.

26. Handwagen nach Anspruch 25, **dadurch gekennzeichnet**, daß eine Distanzhülse (23) auf den Schwenkzapfen (6) aufgesetzt ist, deren freie Fläche an der freien Fläche des unteren der Paßstücke (11.1) anliegt, wobei vorzugsweise der Körper der Distanzhülse mit einer sich an die Vorderachse (5) anlegenden, wulstartigen Anformung (24) versehen ist.

27. Handwagen nach einem der Ansprüche 1 bis 26, **dadurch gekennzeichnet**, daß die Deichsel (8) endseitig abgewinkelte Griffstangen (18) aufweist, die hinsichtlich ihrer Winkelstellungen (20 und 21) zur Zugstange (19) der Deichsel (8) etwa der entlasteten Handgriffstellung (22) eines Menschen entsprechen, wobei die Griffstangen (18) vorzugsweise in einer durch die Zugstange (19) gelegten Vertikalebene oberhalb dieser liegen und mit ihr in einem Winkel (20) von etwa 2° bis 10° und in einer rechtwinklig dazu liegenden Ebene unter einem Winkel (21) zur Zugstange (19) verlaufen, der kleiner als 90° ist und insbesondere im Bereich von 85° bis 65° liegt.

28. Handwagen nach Anspruch 27, **dadurch gekennzeichnet**, daß auf die Griffstangen (18) Griffelemente aufgeschoben sind.

## Claims

1. Hand truck in the form of a ladder truck with platform (10) and side walls (15) as well as removable front and rear walls (16) projecting beyond the platform (10), with a rectangular frame (2) formed as a closed frame, particularly from tubing, being provided as a support for the platform (10), below the rear end area of which there is provided a rear axle (4) and under the front end area of which there is provided a front axle (5) connected to a drawbar swivelling around a centrally fitted, vertical pivot (6), both axles provided with wheels (9), characterized in that the frame (2) is connected to the rear axle (4) via supports (3.1, 3.2) fixed directly on or at the rear axle (4) and connected to the front axle by its pivot via L-shaped angled supports (3.3, 3.4), the supports being fixed to the frame (2) from inside and projecting beyond the frame by the thickness of this platform (10) in such a way that they terminate flush with the platform (10) resting on the frame (2), the supports (3.1, 3.2, 3.3, 3.4) taking the form of tubes with insertion openings (13.1, 13.2), at least in the rising zone, for insertion means provided on the side walls, and means being provided for securing the removable walls.

2. Hand truck as claimed in Claim 1, characterized in that the rear supports (3.1, 3.2) take the form of straight tubes.

3. Hand truck as claimed in Claim 1 or 2, characterized in that at least the tube ends with the insertion openings of the rear supports (3.1 and 3.2) have rectangular profiles and those of the front supports (3.3 and 3.4) have circular profiles.

4. Hand truck as claimed in Claims 1 to 3, characterized in that fitted to the side walls (15) are external insertion parts (14) which can be inserted into the insertion openings (13.1 and 13.2) of the angled supports (3.1, 3.2, 3.3, 3.4).

5. Hand truck as claimed in Claim 4, characterized in that the insertion parts (14) are formed with a taper running in the insertion direction.

6. Hand truck as claimed in Claim 4, characterized in that both the supports (3.1, 3.2, 3.3, 3.4) provided for accommodating the side walls (15) and the insertion openings provided on the side walls (15) for accommodating the insertion parts of the side walls (15) have side openings (13.1, 13.2), and the insertion parts (14) provided on the side walls have noses (14.1) corresponding thereto, the noses (14.1) preferably being aligned in such a way that they point to the longitudinal central plane of the hand truck and preferably having an undercut engaging with the upper edge of the openings.

7. Hand truck as claimed in Claim 6, characterized in that the security pin (3.6) is formed as a safety means in the form of a spring clip with a spring-biassed return leg.

8. Hand truck as claimed in Claim 4, characterized in that the supports (3.1, 3.2, 3.3, 3.4) provided for accommodating the insertion parts of the side walls have side openings (22) and the insertion parts (14) provided on the side walls have noses (14.1) corresponding thereto, the noses (14.1) preferably being aligned in such a way that they point to the longitudinal central plane of the hand truck and preferably having an undercut (22) engaging with the upper edge of the openings.

9. Hand truck as claimed in Claim 8, characterized in that the insertion parts (14) are provided, at least up to the level of the noses (14.1), with a slot (14.2) aligned approximately at right angles to their axis.

10. Hand truck as claimed in Claims 8 or 9, characterized in that the nose opening (3.5) is covered from the outside with a shutter.

11. Hand truck as claimed in Claims 1 to 10, characterized in that the side edges of the front and rear walls (16), insertable into grooves formed by raised strips (17) on the inside of the side walls (15) for closing the box on the platform (10) run at an angle (b), which is kept slightly greater than the angle (a) at which the supports (3.1, 3.2, 3.3 and 3.4), are fitted to the rectangular tube frame (2) for accommodating the insertion parts (14) of the side walls (15).

12. Hand truck as claimed in any one of Claims 1 to 11, characterized in that the insertion rail fitted to the side walls (15) has a head piece (17.2) as an upper limit, the head piece projecting partly into the insertion path of the front or rear wall (16).

13. Hand truck as claimed in any one of Claims 1 to 12, characterized in that plastic bearing supports (25, 25') are pushed on to the axle stub for limiting the axial movement of the attached wheel (9.1; 9.2), the bearing supports (25; 25') being preferably secured against twisting.

14. Hand truck as claimed in Claim 13, characterized in that the locking means of the bearing support (25), which forms the anti-twisting device, has an integrally moulded nose (28), the nose preferably having the form of a U-shaped shoulder and the U-shaped shoulder interacting with one of the supports (3.1; 3.2; 3.3; 3.4).

15. Hand truck as claimed in Claim 14, characterized in that the nose integrally moulded as anti-twisting device has the form of a shoulder-shaped shoulder, which can be inserted into a tube fitted to the axle (4; 5), the shoulder preferably being formed like a straddling dowel.

16. Hand truck as claimed in Claim 13, characterized in that the locking means (31) forming the anti-twisting device has the form of a one-piece moulding (34) consisting of an expansion element (35) insertable into the tube opening (37) of the axle (33), at the front of which a flat dished cap (36) for holding the running wheel (9.1, 9.2) on the axle tube (33) or covering the tube opening (37) is integrally moulded.

17. Hand truck as claimed in Claim 16, characterized in that the expansion element (35) is expandable by means of a tensioning element (38) against the inner wall of the axle tube (33), the explanation element preferably having the form of a straddling dowel.

18. Hand truck as claimed in Claims 16 or 17, characterized in that the moulding (34) has an axially running bore (39) in which the clamping element (38) for radially press-fitting the expansion element (35) is located.

19. Hand truck as claimed in any one of Claims 16 to 18, characterized in that the clamping element (38) has the form of a clamping screw or gripping wedge (40), which is displaceably mounted preferably via an eccentric gear (41) carried in the cap (36) for transmitting the flaring forces of the clamping element (38) in the bore (39).

20. Hand truck as claimed in Claim 19, characterized in that for forming the eccentric gear (41) transverse to the wedge tip (42), a bolt (43) is fastened in such a manner that it rests eccentrically in a sleeve (44) pivotable by means of a lever (45).

21. Hand truck as claimed in any one of Claims 16 to 20, characterized in that the expansion element (35) has radially fitted grooves (47) with slot openings (48) fitted in the bottom area.

22. Hand truck as claimed in any one of Claims 16 to 21, characterized in that the flat dished cap (36) has a peripheral groove (49) on the inside, the wall thickness of which corresponds approximately to the wall thickness of the axle tube (33).

23. Hand truck as claimed in any one of Claims 16 to 22, characterized in that on the outside of the expansion element (35) at least one locking cam (35.1) is provided which, with the locking element (35) inserted and expanded, engages with a recess (33.1) or a bore in the wall of the tubular axle stub (33).

24. Hand truck as claimed in any one of Claims 16 to 23, characterized in that the moulding (34) is produced as a plastic injection moulding.

25. Hand truck as claimed in any one of Claims 1 to 24, characterized in that the pivot bearing of the front axle (5) has the form of a tube section (11), which forms a sleeve loosely accommodating the pivot (6) of the drawbar swivel bearing, with mating parts (11.1) enclosing and carrying the pivot (6) being insertable into the tube section (11) on both sides.

26. Hand truck as claimed in Claim 25, characterized in that a spacer sleeve (23) is placed on the pivot (6), the free surface of which rests against the free surface of the lower one of the mating parts (11.1), with the body of the spacer sleeve being preferably provided with a bead-like integrally moulded part resting against the front axle (5).

27. Hand truck as claimed in any one of Claims 1 to 26, characterized in that the drawbar (8) has gripping bars (18) angled at the ends, which from the point of view of their angular positions (20 and 21) to the pull bar (19) of the drawbar (8) more or less correspond to the relaxed hand grip position (22) of a human being, the gripping bars (18) preferably lying in a vertical plane made by the pull bar (19) above the latter and running with it at an angle (20) of about 2° to 10° and on a plane resting at right angles thereto at an angle (21) to the pull bar (19) which is smaller than 90° and in particular lies in the range from 85° to 65°.

28. Hand truck as claimed in Claim 27, characterized in that gripping elements are pushed on to the gripping bars (18).

## Revendications

1. Chariot à bras du type chariot à ridelles, comprenant une plate-forme (10) et des parois latérales (15), ainsi que des parois amovibles antérieure et postérieure (16) saillant au-delà de la plate-forme (10), un cadre rectangulaire fermé (2), notamment formé d'une tubulure, étant prévu en tant qu'appui de la plate-forme (10), cadre au-dessous de la région extrême postérieure duquel est prévu un essieu arrière (4) et au-dessous de la région extrême antérieure duquel est prévu un essieu avant (5), relié à un timon (18) et pouvant pivoter autour d'un tourillon vertical (6) occupant une position centrale, les deux essieux étant équipés de roues (9), caractérisé par le fait que le cadre (2) est relié à l'essieu arrière (4) par l'intermédiaire de montants de soutien (3.1, 3.2) respectivement fixés, de manière directe, sur ou à cet essieu arrière (4), et est relié à l'essieu avant, par son tourillon, par l'intermédiaire de montants de soutien (3.3, 3.4) coudés en L, les montants de soutien étant fixés au cadre (2) de l'intérieur et dépassant au-delà dudit cadre, de l'épaisseur de la plate-forme (10), de telle sorte qu'ils viennent à fleur de la plate-forme (10) reposant sur le cadre (2), les montants de soutien (3.1, 3.2, 3.3, 3.4) étant réalisés, au moins dans la région dressée verticalement, sous la forme de tubulures munies d'orifices d'emboîtement (13.1, 13.2) pour des moyens d'emboîtement prévus sur les parois latérales, et des moyens étant prévus pour arrêter les parois amovibles.

2. Chariot à bras selon la revendication 1, caractérisé par le fait que les montants postérieurs de soutien (3.1, 3.2) sont réalisés sous la forme de tubulures rectilignes.

3. Chariot à bras selon la revendication 1 ou 2, caractérisé par le fait qu'au moins les extrémités des tubulures, dotées des orifices d'emboîtement des montants postérieurs de soutien (3.1 et 3.2),présentent des profils rectangulaires, et celles des montants antérieurs de soutien (3.3 et 3.4) présentent des profils ronds.

4. Chariot à bras selon les revendications 1 à 3, caractérisé par le fait que des pièces emboîtables (14), appliquées extérieurement contre les parois latérales (15), peuvent être emboîtées dans les orifices d'emboîtement (13.1 et 13.2) des montants coudés de soutien (3.1, 3.2, 3.3, 3.4).

5. Chariot à bras selon la revendication 4, caractérisé par le fait que les pièces emboîtables (14) sont réalisées avec rétrécissement dans la direction d'emboîtement.

6. Chariot à bras selon la revendication 4, caractérisé par le fait qu'aussi bien les montants de soutien (3.1, 3.2, 3.3, 3.4) prévus pour recevoir les parois latérales (15), que les orifices d'emboîtement prévus sur lesdites parois latérales (15) afin de recevoir les pièces emboîtables desdites parois latérales (15), présentent des orifices latéraux (13.1, 13.2), et les pièces emboîtables (14) prévues sur les parois latérales présentent des mentonnets complémentaires (14.1), lesdits mentonnets (14.1) étant préférentiellement orientés en direction du plan médian longitudinal du chariot à bras et comportant, de préférence, une contre-dépouille s'engageant au-dessous du bord supérieur des orifices.

7. Chariot à bras selon la revendication 6, caractérisé par le fait que la goupille d'arrêt (3.6), faisant fonction de moyen d'arrêt, est réalisée à la manière d'un organe élastique emboîtable muni d'un arceau élastique.

8. Chariot à bras selon la revendication 4, caractérisé par le fait que les montants de soutien (3.1, 3.2, 3.3, 3.4), prévus pour recevoir les pièces emboîtables des parois latérales, présentent des orifices latéraux (22), et les pièces emboîtables (14) prévues sur lesdites parois latérales présentent des mentonnets correspondants (14.1), lesdits mentonnets (14.1) étant préférentiellement orientés en direction du plan médian longitudinal du chariot à bras et comportant, de préférence, une contre-dépouille (22) s'engageant au-dessous du bord supérieur des orifices.

9. Chariot à bras selon la revendication 8, caractérisé par le fait que les pièces emboîtables (14) sont pourvues, au moins jusqu'à la hauteur des mentonnets (14.1), d'une fente (14.2) orientée sensiblement à angle droit par rapport à l'axe de ces derniers.

10. Chariot à bras selon la revendication 8 ou 9, caractérisé par le fait que l'orifice (3.5) d'insertion du mentonnet est recouvert, de l'extérieur, par un diaphragme.

11. Chariot à bras selon les revendications 1 à 10, caractérisé par le fait que les bords latéraux des parois antérieure et postérieure (16) pouvant être emboîtées dans des rainures formées intérieurement, sur les parois latérales (15), par des barrettes (17) placées en applique, s'étendent sur la plate-forme (10), en vue de fermer la caisse, selon un angle (b) qui est maintenu légèrement plus grand que l'angle (a) selon lequel les montants de soutien (3.1, 3.2, 3.3 et 3.4) sont disposés, sur le cadre tubulaire rectangulaire (2), pour recevoir les pièces emboîtables (14) des parois latérales (15).

12. Chariot à bras selon l'une des revendications 1 à 11, caractérisé par le fait que la glissière d'emboîtement (17.1), implantée sur les parois latérales (15), présente une pièce frontale (17.2) en tant que délimitation supérieure, la pièce frontale s'engageant partiellement sur le trajet d'insertion de la paroi (16) respectivement antérieure ou postérieure.

13. Chariot à bras selon l'une des revendications 1 à 12, caractérisé par le fait que des coussinets de portée (25 ; 25') en matière plastique sont enfilés sur le bout d'arbre, afin de (imiter le mouvement axial de la roue (9.1 ; 9.2) mise en place, une rotation des coussinets de portée (25 ; 25') étant préférentiellement interdite.

14. Chariot à bras selon la revendication 13, caractérisé par le fait que le moyen de blocage du coussinet de portée (25), formant l'arrêt antirotation, présente une avancée (28) ménagée d'un seul tenant, l'avancée étant préférentiellement réalisée sous la forme d'un appendice configuré en U, et l'appendice configuré en U coopérant avec l'un des montants de soutien (3.1 ; 3.2 ; 3.3 ; 3.4).

15. Chariot à bras selon la revendication 14, caractérisé par le fait que l'avancée, ménagée d'un seul tenant en tant qu'arrêt antirotation, se présente comme un appendice en forme de bouchon pouvant être introduit dans une tubulure (8.1 ; 8.2) calée sur l'essieu (4 ; 5), le bouchon étant préférentiellement d'une réalisation analogue à une cheville expansible.

16. Chariot à bras selon la revendication 13, caractérisé par le fait que le moyen de blocage (31), formant l'arrêt antirotation, est réalisé sous la forme d'une pièce monobloc (34) venue de moulage, la pièce moulée (34) étant constituée d'un élément déployable (35) pouvant être emboîté dans l'embouchure tubulaire (37) de l'essieu (33), et à la face extrême duquel un capuchon (36) à bombement aplati est moulé d'un seul tenant, respectivement pour retenir la roue de roulement (9.1, 9.2) sur la tubulure d'essieu (33), ou pour coiffer l'embouchure tubulaire (37).

17. Chariot à bras selon la revendication 16, caractérisé par le fait que l'élément déployable (35) peut être déployé, au moyen d'un élément de serrage (38), contre la face interne de la paroi de la tubulure d'essieu (33), l'élément déployable étant préférentiellement réalisé sous la forme d'une cheville expansible.

18. Chariot à bras selon les revendications 16 ou 17, caractérisé par le fait que la pièce moulée (34) comporte un canal (39) s'étendant axialement, dans lequel l'élément de serrage (38) est logé en vue de la compression radiale de l'élément déployable (35).

19. Chariot à bras selon l'une des revendications 16 à 18, caractérisé par le fait que l'élément de serrage (38) est réalisé sous la forme d'une vis de serrage ou d'un coin de serrage (40) monté à coulissement, de préférence par l'intermédiaire d'une transmission à excentrique (41) intégrée dans le capuchon (36), en vue de la répercussion des forces d'écartement de l'élément de serrage (38) dans le canal (39).

20. Chariot à bras selon la revendication 19, caractérisé par le fait qu'un tenon (43), fixé transversalement par rapport à la pointe (42) du coin en vue de former la transmission à excentrique (41), est assujetti, avec montage excentré, dans une douille (44) à laquelle un levier (45) peut imprimer des pivotements.

21. Chariot à bras selon l'une des revendications 16 à 20, caractérisé par le fait que l'élément déployable (35) présente des saignées (47) agencées radialement, avec des entailles (48) pratiquées dans la région du fond.

22. Chariot à bras selon l'une des revendications 16 à 21, caractérisé par le fait que le capuchon (36) à bombement aplati comporte, intérieurement, une gorge périphérique (49) dont l'épaisseur de paroi correspond sensiblement à l'épaisseur de paroi de la tubulure d'essieu (33).

23. Chariot à bras selon l'une des revendications 16 à 22, caractérisé par le fait qu'au moins un téton de blocage (35.1) est prévu sur la face extérieure de l'élément déployable (35), lequel téton pénètre, lorsque l'élément de blocage (35) est inséré et déployé, dans un évidement (33.1) ou un trou façonné dans la paroi du bout d'arbre tubulaire (33).

24. Chariot à bras selon l'une des revendications 16 à 23, caractérisé par le fait que la pièce moulée (34) est fabriquée sous la forme d'une pièce venue de moulage par injection en matière plastique.

25. Chariot à bras selon l'une des revendications 1 à 24, caractérisé par le fait que la portée rotative de l'essieu avant (5) est réalisée sous la forme d'une pièce tubulaire (11) formant une douille recevant, avec jeu, le tourillon de pivotement (6) de la portée pivotante du timon, des organes d'ajustement (11.1), qui ceinturent le tourillon de pivotement (6) et assurent son montage, étant intégrés de part et d'autre dans la pièce tubulaire (11).

26. Chariot à bras selon la revendication 25, caractérisé par le fait qu'une douille d'espacement (23) est enfilée sur le tourillon de pivotement (6) et porte, par sa surface libre, contre la surface libre de l'organe inférieur parmi les organes d'ajustement (11.1), le corps de la douille d'espacement étant muni, de préférence, d'une protubérance (24) du type bourrelet venant s'appliquer sur l'essieu avant (5).

27. Chariot à bras selon l'une des revendications 1 à 26, caractérisé par le fait que le timon (8) présente des barres de préhension (18) coudées aux extrémités, dont les positions angulaires (20 et 21) correspondent sensiblement, vis-à-vis de la tige de traction (19) dudit timon (8), à la position de préhension manuelle soulagée (22) d'un être humain, les barres de préhension (18) se trouvant préférentiellement dans un plan vertical passant par la tige de traction (19), au-dessus de cette dernière, avec laquelle elles forment un angle (20) d'environ 2° à 10°, et s'étendant par rapport à la tige de traction (19), dans un plan perpendiculaire à cette dernière, selon un angle (21) qui est inférieur à 90° et se situe, en particulier, dans la plage de 85° à 65°.

28. Chariot à bras selon la revendication 27, caractérisé par le fait que des éléments offrant une prise sont enfilés sur les barres de préhension (18).
